# EUROPÄISCHE PATENTSCHRIFT

(11) **EP 1 728 581 B1**
(45) Veröffentlichungstag und Bekanntmachung des Hinweises auf die Patenterteilung: **21.10.2009**
(21) Anmeldenummer: 05011709.2
(22) Anmeldetag: 31.05.2005
(51) Int. Cl.: B23K 26/04, B23K 26/38, B23K 26/10, B23K 26/14

(54) **Laserbearbeitungsmaschine mit Laserbearbeitungsdüsenjustierung zum Ausrichten des Laserstrahles mit der Laserbearbeitungsdüsenbohrung**
Laser working machine with a laser working nozzle adjustment means for aligning the laser beam with the hole of the laser working nozzle
Machine d'usinage laser avec des moyens d'ajustement de la buse pour aligner le faisceau laser avec le trou de passage du faisceau laser dans la buse

(43) Veröffentlichungstag der Anmeldung: 06.12.2006
(73) Patentinhaber: TRUMPF Werkzeugmaschinen GmbH + Co. KG, 71254 Ditzingen (DE)
(72) Erfinder: Weick, Jürgen-Michael, 71679 Asperg (DE); Häcker, Michael, 71299 Wimsberg (DE)
(74) Vertreter: Kohler Schmid Möbus

(56) Entgegenhaltungen:
- WO-A-03/061895
- PATENT ABSTRACTS OF JAPAN Bd. 1998, Nr. 14, 31. Dezember 1998 (1998-12-31) -& JP 10 249566 A (AMADA CO LTD), 22. September 1998 (1998-09-22)
- PATENT ABSTRACTS OF JAPAN Bd. 008, Nr. 132 (M-303), 20. Juni 1984 (1984-06-20) -& JP 59 033092 A (MITSUBISHI ELECTRIC CORP), 22. Februar 1984 (1984-02-22)
- PATENT ABSTRACTS OF JAPAN Bd. 2003, Nr. 12, 5. Dezember 2003 (2003-12-05) -& JP 2003 225787 A (AMADA CO LTD), 12. August 2003 (2003-08-12)
- PATENT ABSTRACTS OF JAPAN Bd. 1995, Nr. 09, 31. Oktober 1995 (1995-10-31) -& JP 07 144289 A (FUKUI NIIGATA KIKAI KK), 6. Juni 1995 (1995-06-06)

## Beschreibung

Die vorliegende Erfindung betrifft eine Laserbearbeitungsmaschine gemäß dem Oberbegriff des Anspruchs 1 (siehe, z.B., JP 59/033092 A).

Für eine optimale Materialbearbeitung ist es erforderlich, den Laserstrahl innerhalb der Laserbearbeitungsdüse möglichst zentrisch anzuordnen. Diese Laserbearbeitungsdüsenjustierüng wird bisher manuell durchgeführt.

Der Anmelder hat sich die Aufgabe gestellt, die möglichst zentrische Anordnung des Laserbearbeitungsstrahls innerhalb der Düsenbohrung einer Laserbearbeitungsdüse des Laserschneidkopfs automatisieren zu können.

Eine Laserbearbeitungsmaschine gemäß der Erfindung ist im Anspruch 1 definiert.

Durch die Erfindung wird die Düsenmitte durch eine Referenzmessung bestimmt, wobei je ein Bild der ausgeleuchteten Düse und eines fokussierten Strahles aufgenommen und ausgewertet wird. Die Messsignale werden über die Maschinensteuerung für die automatische Laserdüsenzentrierung verwendet.

Es ist eine separate Laserdiode-Lichtquelle zur Ausleuchtung der Düsenbohrung vorgesehen . Dies hat den Vorteil, dass der zur Laserbearbeitung ausgebildete Laserstrahl nicht verstellt werden muss. Ein weiterer wesentlicher Vorteil bei der Verwendung der separaten Lichtquelle liegt darin, dass man sichtbares Licht verwendet kann. Daher können Detektoren für sichtbares Licht eingesetzt werden, welche standardmäßig und kostengünstig hergestellt werden können.

In technischer Umsetzung der Arbeitsweise gemäß der Erfindung mit der Laserdiode zur Strahlerzeugung, eine Optik zur Strahlaufweitung, ein Umlenkspiegel und ein Spiegel zur Einspiegelung des Lichtstrahls kollinear zum Laserbearbeitungsstrahl in Betracht.

Da gemäß der Erfindung der Umlenkspiegel und der Spiegel Teil einer Prozesslichtmesseinrichtung sind, wird die Erfindung mit einer an sich bekannten Prozesslichtmesseinrichtung kombiniert und vorteilhaft in eine Laserbearbeitungsmaschine integriert .

Zur Auswertung ist eine Bilderfassungs- und Bildauswerteeinrichtung vorteilhaft.

Die Optik zur Strahlführung und Fokussierung eines Laserstrahls kann einen adaptiven Spiegel umfassen, der zur Einstellung der Ausleuchtung eingesetzt werden kann.

Bevorzugte Ausführungsbeispiele der Erfindung werden anhand der schematischen Zeichnung erläutert. Es zeigt:
- Figur 1: eine Laserschneidmaschine;
- Figur 2: einen Teil der Laserstrahlführung und eine Einspiegelung eines weiteren Laserstrahls zur Ausleuchtung der Schneiddüsenbohrung, der nicht Gegenstand der Erfindung ist;
- Figur 3: einen Teil der Laserstrahlführung und eine Einspiegelung in Verbindung mit einer Prozesslichtmessung gemäß der Erfindung;
- Figur 4: den fokussierten Laserschneidstrahl innerhalb der Schneiddüse;
- Figur 5: die Ausleuchtung der Schneiddüsenbohrung mithilfe des weiteren Laserstrahls;

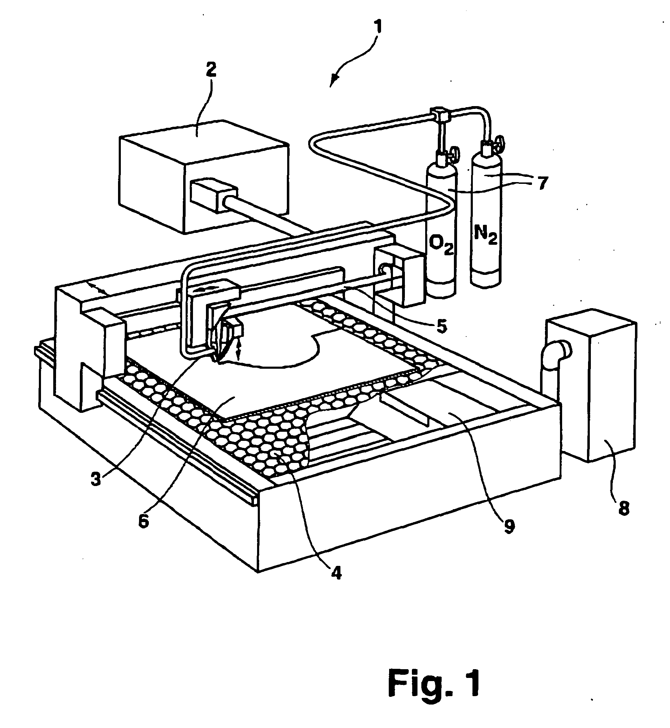

Aus der **Figur 1** ist der Aufbau einer Laserbearbeitungsmaschine **1** zum Laserschneiden mit einem CO₂-Laser **2,** einem Laserbearbeitungskopf **3** und einer Werkstückauflage **4** ersichtlich. Ein erzeugter Laserstrahl **5** wird mithilfe von Umlenkspiegeln zum Laserbearbeitungskopf 3 geführt und mithilfe von Spiegeln auf ein Werkstück **6** gerichtet. In die Strahlführung des Laserstrahls 5 kann die erfindungsgemäße Vorrichtung an beliebiger Stelle eingebaut werden.

Bevor eine durchgängige Schnittfuge entsteht, muss der Laserstrahl 5 das Werkstück 6 durchdringen. Das Blech 6 muss an einer Stelle punktförmig geschmolzen oder oxidiert werden, und die Schmelze muss ausgeblasen werden.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **7** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Dort, wo der Laserstrahl 5 auf das Blech 6 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **8** aus einer Absaugkammer **9** abgesaugt werden.

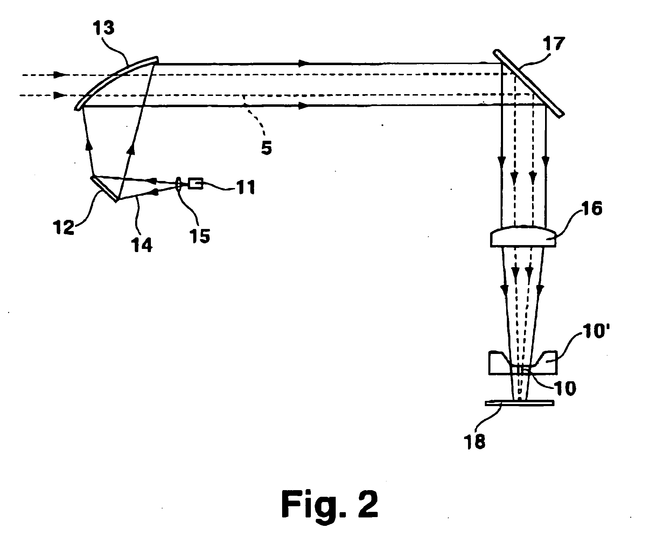

Gemäß **Figur 2** umfasst eine Einrichtung, die nicht Gegenstand der Erfindung ist zur Ausleuchtung einer Schneiddüsenbohrung **10** einer Schneiddüse **10'** des Schneidkopfs 3 im Wesentlichen eine Laserdiode **11,** einen unter einem Winkel von 45° angeordneten Umlenkspiegel **12** und einen Spiegel **13,** der es erlaubt, einen sichtbaren Laserstrahl 14 kollinerar zum Laserschneidstrahl 5 des CO₂-Lasers einzuspiegeln. Dazu wird der Laserstrahl 14 der Laserdiode 11 so aufgeweitet, dass er auf den Rand des Spiegels 13 trifft. Die Brennweite einer Aufweitlinse **15** und ihr Abstand zu dem Spiegel 13 sind so gewählt, dass eine Fokussieroptik **16** (Linse oder Spiegel) mithilfe des Laserstrahls 14 der Laserdiode 11 voll ausgeleuchtet wird.

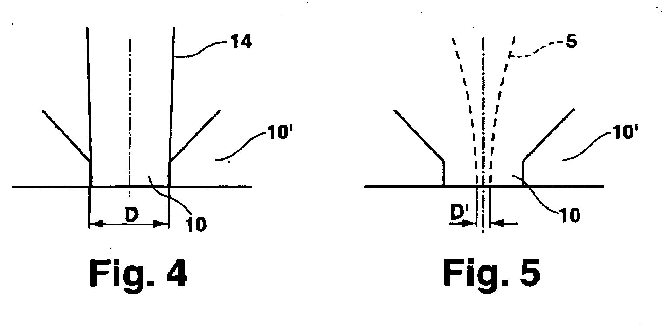

Mittels eines adaptiven Spiegels **17** wird die Fokuslage von Linse oder Fokussierspiegel 16 nun so weit verstellt, dass die Düsenbohrung 10 voll ausgeleuchtet wird. Der Laserstrahl 14 streift dabei den Rand der Düsenbohrung 10. Eine direkt unter der Laserschneiddüse 10' angeordnete Mattscheibe **18** zeigt einen roten Fleck mit einem Durchmesser **D,** dessen Berandung exakt der Düsenbohrung 10 entspricht. Mittels Kamera und Bildauswertung kann nun in einem ersten Verfahrensschritt genau die Düsenmitte der Düsenbohrung 10 bestimmt und ausgewertet werden (siehe **Figur 4**). Die Fokuslage wird in einem zweiten Verfahrensschritt genau in die Ebene der Düsenunterkante gelegt. Der dem Fokus entsprechende Fleck besitzt einen Durchmesser **D'** von ca. 0,1 mm. Dessen Mitte wird wieder bestimmt (siehe **Figur 5**). Die Abweichung von Strahlmitte zu Düsenmitte kann bestimmt und zur automatischen Justierung verwendet werden.

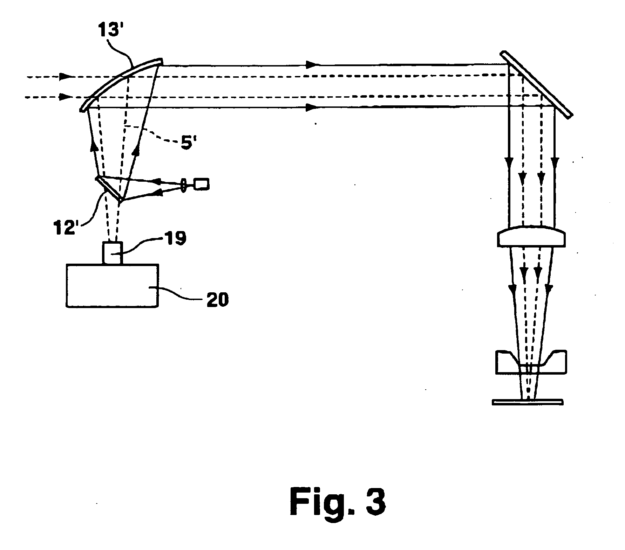

**Figur 3** zeigt eine Einrichtung gemäß der Erfindung, mit einer Prozesslichtmesseinrichtung. Der wichtigste Punkt ist, dass der Spiegel **13'** ein Loch aufweist, durch das der Bearbeitungslaserstrahl 5 durchtritt. Die zusätzliche Strahlquelle wird über einen teildurchlässigen Spiegel **12'** und den sog. Scraper-Spiegel 13' in die Strahlführung eingekoppelt. Als Spiegel 13' ist mit dem PCS Scraper ein geeigneter Spiegel in der Laserschneidmaschine bereits vorhanden, der zu diesem Zweck zusätzlich verwendet werden kann. Die Laserschneidmaschine ist mit der optischen Prozesslichtmesseinrichtung versehen, wobei der Spiegel 13' Teii der Prozesslichtmesseinrichtung ist. Die Prozesslichtmesseinrichtung kann herkömmlicher Bauart sein. Derartige Messeinrichtungen werden beispielsweise von der Firma TRUMPF, Ditzingen, Deutschland unter der Bezeichnung "PCS" vertrieben. PCS ist ein optisches System, welches das Prozesslicht während des Einstichs misst. Entsprechend der angewählten Funktion im DIAS-PCS-PC kann mit Hilfe dieser Messwerte der Einstechvorgang gesteuert (sanftes Einstechen) und / oder das Einstech-Ende erkannt werden (sanftes und volles Einstechen). Rückreflektiertes Prozesslicht **5',** das aufgrund des Laser-Leistungsstrahls an der Einstechposition entsteht, wird mithilfe des Scraperspiegels 13' auf eine Photodiode **19** gelenkt, die dessen Intensität in einen entsprechenden Strom umwandelt. Die Elektronik **20** im Messkopf misst diesen Strom und überträgt diese Messwerte digital an die Auswerte-Elektronik, die diese Daten entsprechend weiter verarbeitet.

## Patentansprüche

1. Laserbearbeitungsmaschine (1) mit einer Optik zur Strahlführung und Fokussierung eines Laserstrahls (5), umfassend: eine Einrichtung zur Ausleuchtung der Düsenbohrung (10) einer Laserbearbeitungsdüse (10') des Laserbearbeitungskopfs (3), **gekennzeichnet durch** eine Einrichtung zur Bestimmung der Mitte der Düsenbohrung (10) mithilfe der Ausleuchtung und eine Einrichtung zur Bestimmung des Abstandes des Laserstrahlfokus zur Düsenmitte eine Prozesslichtmesseinrichtung, wobei die Einrichtung zur Ausleuchtung der Düsenbohrung (10) eine Laserdiode (11) als separate Lichtquelle zur Erzeugung eines Lichtstrahls (14), eine Optik (15) zur Strahlaufweitung des Lichtstrahls (14) der Laserdiode (II) einen Umlenkspiegel (12') und einen Spiegel (13') zur Einspiegelung des Lichtstrahls (14) der Laserdiode (II) kollinear zum Laserbearbeitungsstrahl (5) aufweist, und wobei der Umlenkspiegel (12') und der Spiegel (13') Teil der Prozesslichtmesseinrichtung sind.

2. Laserbearbeitungsmaschine (1) nach Anspruch 1, **dadurch gekennzeichnet, dass** eine Bilderfassungs- und Bildauswerteeinrichtung vorgesehen ist.

3. Laserbearbeitungsmaschine (1) nach einem der vorhergehenden Ansprüche, **dadurch gekennzeichnet, dass** die Optik zur Strahlführung und Fokussierung des Laserstrahls (5) einen adaptiven Spiegel (17) umfasst.

## Claims

1. Laser processing machine (1) having an optical system for beam guidance and focusing of a laser beam (5), comprising: a device for illuminating the nozzle bore (10) of a laser processing nozzle (10') of the laser processing head (3), **characterised by** a device for determining the centre of the nozzle bore (10) with the aid of the illumination, and a device for determining the distance of the laser beam focus from the centre of the nozzle, and a process light measuring device, wherein the device for illuminating the nozzle bore (10) has a laser diode (11) as a separate light source for generating a light beam (14), an optical system (15) for widening the light beam (14) of the laser diode (11), a defecting mirror (12') and a mirror (13') for reflecting the light beam (14) collinearly with the laser processing beam (5), and wherein the deflecting mirror (12') and the mirror (13') form part of the process light measuring device.

2. Laser processing machine (1) according to claim 1, **characterised in that** an image capture and image evaluation device is provided.

3. Laser processing machine (1) according to either of the preceding claims, **characterised in that** the optical system for beam guidance and focusing of the laser beam (5) includes an adaptive mirror (17).

## Revendications

1. Machine d'usinage par laser (1) avec une optique pour guider et focaliser un faisceau laser (5), comprenant : un dispositif pour éclairer le trou de passage (10) d'une buse d'usinage par laser (10') de la tête d'usinage par laser (3), **caractérisée par** un dispositif pour déterminer le centre du trou de passage (10) à l'aide de l'éclairage et un dispositif pour déterminer la distance du foyer du faisceau laser par rapport au centre de buse, un dispositif de mesure de la lumière de procédé, le dispositif pour éclairer le trou de passage (10) présentant une diode laser (11) comme source de lumière séparée servant à générer un faisceau lumineux (14), une optique (15) pour élargir le faisceau lumineux (14) de la diode laser (11), un miroir de déviation (12') et un miroir (13') pour réfléchir le faisceau lumineux (14) de la diode laser (11) colinéairement au faisceau d'usinage par laser (5), et le miroir de déviation (12') et le miroir (13') faisant partie du dispositif de mesure de la lumière de procédé.

2. Machine d'usinage par laser (1) selon la revendication 1, **caractérisée en ce qu'**un dispositif d'acquisition et d'évaluation d'images est prévu.

3. Machine d'usinage par laser (1) selon l'une des revendications précédentes, **caractérisée en ce que** l'optique pour guider et focaliser le faisceau laser (5) comprend un miroir adaptatif (17).
